# EUROPEAN PATENT APPLICATION

(11) **EP 3 517 516 A1**
(43) Date of publication of application: **31.07.2019**
(21) Application number: 19154085.5
(22) Date of filing: 29.01.2019
(51) Int. Cl.: C04B 28/02, C04B 28/10, C04B 26/28

(54) **COMPOSITION BASED ON CALCIUM CARBONATE FOR USE AS A CEMENT**

(30) Priority: 30.01.2018 IT 201800002168
(71) Applicant: Istituto Scientifico di Chimica E Biochimica Giuliana Ronzoni, 20133 Milan (IT)
(72) Inventor: Torri, Giangiacomo, 20133 Milan (IT); Naggi, Annamaria, 20133 Milan (IT); Cassar, Luigi, 20133 Milan (IT); Colombo Castelli, Gabriele, 20133 Milan (IT); Goisis, Marco, 20133 Milan (IT); Falini, Giuseppe, 20133 Milan (IT)
(74) Representative: Serravalle, Marco

(57) **Abstract**

The present invention is directed to a composition for use as a cement comprising from 60 to 99 wt % of calcium carbonate and from 0 to 40 % by weight of cement, and at least one polysaccharide in an amount comprised between 0.1 and 10 wt %, wherein the polysaccharide has an average negative charge of at least 0.5 in terms of charge/saccharide unit, and wherein the wt % is based on the dry composition. The composition preferably comprises less than 30 wt % cement and from 1 to 10 wt % polysaccharide. A preferred polysaccharide is chondroitin sulfate, optionally with a small amount of at least another polysaccharide, e.g. sodium alginate. The invention is also directed to a method for the preparation of a cementitious composition as previously defined, comprising the following steps: a) preparing a mixture of carbonate and optionally cement; b) adding water, comprising from 0.1 to 10 wt% of at least one polysaccharide, in an amount comprised between 10 and 100% based on the amount of the mixture a); and c) mixing water with the mixture of carbonate and optionally cement.

## Description

**.** Cement is a hydraulic binder, i.e. a finely divided inorganic powder that reacts with water forming a paste which coagulates and hardens by hydration, and once hardened, it maintains its resistance also under water. As a hydraulic binder, it is used to produce cementitious products such as mortar or concrete, capable of maintaining the necessary consistence as long as required for casting operation and able to reach, after given periods of time, predetermined mechanical resistance levels with long-term stability in terms of volume.

**.** The production of Portland clinker, and hence conventional cements, is a big issue for the environment because of the emission of carbon dioxide into the atmosphere due to the chemical reaction involved (decarbonation) and to the combustion of the fuel to reach the temperature required to the process which is performed at about 1400 °C. It is estimated that each ton of Portland clinker results in the production of about one ton of CO₂. It is therefore important to find substitutes for Portland cement lowering the clinker content by introducing in the composition supplementary materials also maintaining adequate mechanical and rheological properties. A candidate as an alternative material for at least partial substitution of Portland cement is calcium carbonate, also called limestone.

**.** US 5,908,502 discloses limestone-filled Portland cement. The patent shows that, when selecting a limestone with a specific particle size, it is possible to add up to 20% limestone and maintain approximately the same compressive strength. However, when reaching a level of 25% of limestone, there is a small but relevant decrease in strength.

**.** The EN 197-1 standard defines 27 different types of cement. CEM I (Portland cement) is defined as composed of 95 to 100 wt % Portland clinker and 0-5 wt % of minor components. Portland cement clinker is made by reacting at high temperature specified mixtures of raw materials (raw meal, paste or slurry) containing fundamental elements, usually expressed as oxides, CaO, SiO₂, Al₂O₃, Fe₂O₃ and small quantities of other compounds. Portland cement clinker is a hydraulic material which approx. shall consist of at least two-thirds by mass of calcium silicates (3CaO · SiO2 and 2CaO · SiO2), the remainder consisting of aluminium and iron containing clinker phases and other compounds. The ratio by mass (CaO)/(SiO2) shall be not less than 2,0. The content of magnesium oxide (MgO) shall not exceed 5.0 wt %.

**.** In the EN 197-1 two main types of Portland limestone cement are present: CEM II/A-LL which is composed of 80-96 wt % clinker and 6-20 wt % limestone, and CEM II/B-LL consisting of 65-79 wt % clinker and 21-35 wt % limestone. All the remaining 25 types of cement do not include limestone as a component.

**.** The inclusion of limestone filler in recipes for mortar and/or concrete belongs to the state of art to achieve targeted performance such as in the case of self-compacting concrete. However, in concrete technology, cement and limestone are typically combined with a significant amount of fine and coarse mineral aggregates to increase the amount of fines.

**.** It has been surprisingly found that it is possible to prepare a cementitious composition for use as a cement having a calcium carbonate content of at least 60 wt %, preferably at least 70 wt %, and from 0 to 40 % of CEM I, preferably from 5 to 30 wt %, more preferably from 10 to 25 wt % wherein the cementitious composition has a compressive strength equal to or higher than 50 %, preferably equal to or higher than 60 % of the compressive strength of CEM I. Furthermore, it has been found that by adding to the composition one or more polysaccharides it is possible to further reduce the loss of mechanical performance of the cementitious composition. Preliminary results show that the addition of one or more polysaccharides also allows to completely eliminate cement from the composition. Thus, the composition according to the invention comprises from 60 to 99 wt % of calcium carbonate, from 0 to 40 wt % of cement and from 0.1 to 10 wt % of at least one polysaccharide.

**.** In a first embodiment of the invention, it is disclosed a composition consisting of calcium carbonate in an amount comprised between 60 and 95 wt % and cement in an amount comprised between 5 and 40 wt %. The composition further comprises at least one polysaccharide, e.g. chondroitin-4-sulfate, carboxymethyl cellulose, alginate, dermatan sulfate, dextran sulfate, and the like. The polysaccharide is preferably a polar compound, and comprises a polar functional group, e.g. sulfate and/or carboxyl and/or phosphate, which coordinate with the ions of the calcium carbonate structure. The percentages are calculated based on the dry composition, i.e. water added to the composition is not counted for the calculation of the percentages.

**.** In a second embodiment of the invention, the composition comprises from 900 to 99 wt % of calcium carbonate, from 0 to 5 wt % of CEM I and from 0.1 to 10 wt % of at least one polysaccharide, e.g. chondroitin-4-sulfate, carboxymethyl cellulose (CMC), alginate, dermatan sulfate, dextran sulfate, and the like.

**.** Without being bound to any theory, it seems that the presence of a density of charge on the polymer positively influences the capability of the polysaccharide to interact with calcium carbonate and improve the mechanical properties of composition without or with very low amount of cement. In a preferred embodiment, the polysaccharide used in the compositions according to the invention has an average negative charge per saccharide unit (DC) of at least 0.5, preferably at least 0.8, most preferably at least 1.

**.** The molecular weight of the polysaccharide in both embodiments depends on the type of composition in which it is used and from the structure of the polymer. For example, chondroitin sulfate having a Mw comprised between 10,000 and 30,000 is preferably used, however, also depolymerized chondroitin sulfate having Mw as low as 5000 can be used. Concerning alginates, Mw can vary between 15,000 and 400,000. The higher is the amount of cement, the lower will be the Mw of alginate. In fact, it has been observed that the viscosity of a composition comprising cement, calcium carbonate and alginate increases sharply when the amount of cement is increased and, at a given level of alginate, it increases with the increase of the Mw of alginate.

**.** On the other hand, when cement is present in a low amount, or it is not present, it is possible to use alginate having high Mw, preferably in combination with another polysaccharide, e.g. chondroitin sulfate. Without being bound to any theory, it is believed that in the compositions of the present invention, different polymers play different roles, e.g. alginate helps avoiding stratification of particles with different density, while other polysaccharides act as a binder, producing an increase in compressive strength.

**.** In the present invention, different forms of calcium carbonate can be used. All the experiments have been carried out with calcite powder, having particle size higher than 100 mesh for more than 62% (measurement performed through particle sieves), a density of 0.168 g/ml, irregular shape and non-homogeneous dimensions of calcium carbonate particles ranging from small aggregates, of less than 1 µm, to other of more than 20 µm lengths (SEM). However, other types of calcium carbonate with different particle size and shape might be used in the present invention.

**.** The total amount of polysaccharides used in the composition varies from 0.1% to 10%. In compositions containing o low amount of cement or not containing cement, it is possible to use a total amount of polysaccharides of at least 1%, preferably from 2 to 10 % by weight, more preferably from 2.5 to 8% by weight. Preferably, the composition comprises from 0.1 to 2 % by weight of an alginate, and additionally from 1 to 5 % of a second polysaccharide, e.g. chondroitin sulfate or carboxymethyl cellulose.

**.** In all embodiments of the invention, a small amount of dispersant can be used. Dispersants, also known as superplasticizers or water reducers, are used extensively in cementitious mixtures to improve the rheological properties that relate to the initial and over time consistence. As dispersant, amongst other, polycarboxylic ether (PCE) and sulphonated naphthalene formaldehyde (SNF) are commonly used. A commercially available dispersant for use in the present invention is for example ViscoCrete®-430 P produced by Sika®. The dispersant or superplasticizer, when present, is preferably added in an amount comprised between 0.01 wt % and 1 wt %, preferably between 0.05 wt % and 0.5 wt %.

**.** The amount of water used in the preparation of the cementitious compositions according to the invention can vary according to several factors, e.g. the amount of cement present, the possible use of a dispersant or a superplasticizer, the type, amount and Mw of polysaccharide. In general, the composition according to the invention is preferably prepared using an amount of water based on the total amount of cement + carbonate in the range from 10 wt % to 100 wt %, preferably from 12 wt % to 60 wt %, more preferably from 15 to 50 wt %, most preferably between 18 and 40 wt %.

**.** The invention is also directed to a method for the preparation of a cementitious composition, comprising the following steps: a) preparing the mixture carbonate and optionally cement; b) adding an amount of water comprised between 10 and 100% based on the amount of the dry mixture a); c) mixing water and the mixture of carbonate and optionally cement. According to an embodiment of the method, the water added in step b) comprises an amount of 0.1 to 10 wt % based on the amount of the mixture of a), of the at least one polysaccharide. Optionally, the water added in step b) also comprises an amount of 0.01 to 1 wt %, based on the amount of the mixture of a), of a dispersant or superplasticizer.

### Experimental part

**.** The first screening (Tab 1) was done using different polysaccharide solutions. CaCO₃ was introduced into a polysaccharide solution with a polysaccharide concentration ranging from 0.01 to 120 mg/ml in function of the solubility of polysaccharide or the desired ratio between CaCO₃ and polysaccharides and water. After stirring for 3 minutes at room temperature the paste was poured into a petri mould of 5 cm of diameter and 1 cm high. The mixture is allowed to dry for two days. The resistance-to-rupture tests were carried out manually. The empirical values of mechanical resistance were described by a score from 1 to 4 "+" reported in the last column of the table 1. By varying polysaccharide and percentage of water in the mixture, the obtained dry materials displayed different appearance and compactness. As it is clear from table 1, the best results are obtained with those polysaccharides with a higher density of charge (DC).

**Table 1 Preparation of test-pieces with CaCO₃ and different polysaccharides**

| **Polysaccharides** | **DC (charge per saccharide unit)** | **g CaCO₃** | **Polysacch./CaCO₃ % (w/w)** | **Polysacch./CaCO₃ (mol/mol)** | **H₂O/ CaCO₃ (w/w)** | **Time of drying days** | **Empirical evaluation of resistance** |
|---|---|---|---|---|---|---|---|
| **Chondroitin Na** | 1.1 | 6 | 2% | 0,004 | 52% | 2 | ++ |
| **salt** | | | 6% | 0,013 | 51% | 2 | +++ |
| **Chondroitin H+ form** | 1.1 | 4.5 | 6% | 0,013 | 51% | 2 | ++ |
| **Alginic acid (70%)** | 1 | | 2% | 0,006 | 52% | 2 | + |
| **Alginic Acid** | 1 | 4.5 | 2% | 0,007 | 52% | 2 | + |
| **Sodium alginate** | 1 | 4.5 | 10% | 0,025 | 200% | 5 | ++++ |
| **medium viscosity** | | | 2% | 0,005 | 50% | 2 | +++ |
| **Xantan** | 0.2 | 4.5 | 1% | 0,001 | 50% | 2 | + |
| **LBG¹** | 0 | 4.5 | 1% | 0,001 | 50% | 2 | + |
| **Xantan + LBG (solubilized at T°C=60°)** | 0.1 | 4.5 | 1% | 0,001 | 50% | 2 | + |
| **Phosphated starch** | 0.2 | 6 | 10% | 0,015 | 43% | 2 | ++ |
| **cross-linked CMC** | 0.7 | 6 | 10% | 0,025 | 48% | 2 | ++ |
| **CMC DC 0.33** | 0.33 | 6 | 10% | 0,025 | 48% | 2 | + |
| **CMC DC 2** | 2.0 | 6 | 10% | 0,025 | 48% | 2 | ++++ |
| | | | 2% | 0,005 | 48% | 2 | +++ |
| **Dermatan sulfate** | 1.1 | 6 | 6% | 0,013 | 51% | 2 | ++ |
| **Dextran sulfate** | 1.5 | 6 | 6% | 0,013 | 51% | 2 | ++ |

| | | | | | | | |
|---|---|---|---|---|---|---|---|
| ¹LBG: Locust bean gum | | | | | | | |

**.** A second set of experiments, summarized in table 2, was performed using CMC and sodium alginate. The test pieces were made with 36 g of CaCO₃ to have parallelepipeds with a base of 4 cm x 2 cm and a height of 3 cm.

**Table 2**

| polysaccharide | MW (Dalton) | polymer/CaCO₃ (% w/w) | Polymer solution (mg/ml) | CaCO₃/H₂O (g/ml) | Empirical evaluation | | Paste viscosity |
|---|---|---|---|---|---|---|---|
| | | | | | strength | Sample shape | |
| CMC DC 2 | 20000 | 10% | 80 | 0.8 | + + | - | high |
| CMC DC 2 | 20000 | 10% | 65 | 0.6 | + + | - | medium |
| CMC DC 2 | 20000 | 5% | 80 | 1.6 | + + | - | high |
| sodium alginate | 200000 | 10% | 51 | 0.5 | + + + | - | medium |
| sodium alginate | 200000 | 2% | 36 | 1.7 | + + | + | high |
| sodium alginate | 80000 | 10% | 180 | 1.8 | + + | - | very high* |
| sodium alginate | 80000 | 10% | 100 | 1 | + + | - | high |
| sodium alginate | 80000 | 5% | 100 | 2 | ++ | - | high |
| sodium alginate | 80000 | 10% | 78 | 0.8 | ++ | - | medium |
| sodium alginate | 25000 | 5% | 150 | 3 | + | + + + | low |

**.** CaCO₃ was mixed with carboxymethyl cellulose with a density of charge of 2 (DC2 CMC) and sodium alginate. DC 2 CMC and alginate interact well with calcium carbonate and develop a paste that once dried assumes discrete mechanical properties. These new preparations confirmed the strength of the materials obtained with sodium alginate and CMC DC-2. The sample that appears more resistant was the one produced with sodium alginate of high molecular weight (200,000 Da). Its shape, however, was very irregular. The test pieces presented fissures and cavities due to the volume reduction after water evaporation (evaluate - in the "shape" column of the following tables). That could depend on the excess of water added to the formulation to obtain the complete dissolution of the polysaccharides. Using an sodium alginate with lower molecular weight, it was possible to reduce the % of H₂O obtaining a better shape.

**.** The tests were repeated with test pieces of different shape (base 7 cm x 4 cm, height 0.5 cm) containing 50 g of CaC03, 2% of polymer and a reduced content of water. The thin shape allows a quicker evaporation without cracks nor deformations. Table 3 shows the differences amongst different preparations. The test pieces formulated with high MW sodium alginate is the most resistant to compressive stress. A test with a polyacrylate of Mw 5000 is reported as a comparison. It is possible to note that polysaccharides according to the invention result in a higher compressive strength of the sample.

**Table 3**

| Polymer | MW (Dalton) | Polym/CaCO₃ (% w/w) | Polym/ H₂O (mg/ml) | CaCO₃/H₂O (g/ml) | Empirical evaluation | | |
|---|---|---|---|---|---|---|---|
| | | | | | strength | Sample shape | viscosiy |
| Sodium alginate | 80000 | 2% | 40 | 2 | ++ | ++ | medium |
| polyacrylate | 5000 | 2% | 40 | 2 | + | ++ | very low |
| Sodium alginate | 200000 | 2% | 40 | 2 | +++ | ++ | high |
| CMC DC 2 | | 2% | 40 | 2 | ++ | ++ | very low |

**.** Table 4 shows the trend of compressive strength of different mixtures of CEM I with calcium carbonate. Cubic samples (5 cm x 5 cm x 5 cm) were prepared adding 100g of CaCO₃, or a mixture of CaCO₃ and cement or cement, to a solution of 0.25 g of a ViscoCrete®-430 P (peg-acrylate based dispersant) in an amount of water equal to 20 g plus 4 g of water per 20 g of cement. The mixture was blended at 300 rpm with a mechanical stirrer for 5 minutes. After mixing, water (15 ml) was added and the stirring was continued for 6 minutes, then the mix was poured in the mold and allowed to dry at room temperature. Table 4 reports the total amount of water added to each sample.

**.** It is important to note that the trend of the values at 0%, 20 % and 40 wt % carbonate is in line with the expectations of the skilled person, i.e. the increase in calcium carbonate leads to a reduction of compressive strength. The values at 60 wt % and 80 wt % carbonate are totally unpredictable and show that a composition with a minority of cement and a majority of calcium carbonate behave differently than a composition with a minority of calcium carbonate. The recovery in compressive strength indicates that the material is of interest as a new type of cement. The examples are performed at a comparable amount of water, i.e. starting with pure carbonate which is mixed with 20 + 15 wt % water; the other compositions are prepared by adding 15 + 20 wt % water plus 20 wt % of water relatively to the amount of cement, since it is assumed that 20 wt % is the amount of water which is coordinated by cement during hydration. Thus, for example, the sample with 40 wt % cement is added with 15 + 20 + 40·0.20 = 43 wt % water. Consequently, although the compression stress values are low, they are comparable with each other and indicate the trend at different levels of calcium carbonate.

**Table 4**

| **CaCO₃ (g)** | **Cement (g)** | **H₂O added (g)** | **strength MPa** |
|---|---|---|---|
| 100 | 0 | **35** | **n.d** |
| 80 | 20 | **39** | **38,7** |
| 60 | 40 | **43** | **33,5** |
| 40 | 60 | **47** | **30,2** |
| 20 | 80 | **51** | **37.0** |
| 0 | 100 | **55** | **48,2** |

**.** Table 5 shows the results obtained by adding a mixture chondroitin sulfate to a Cement/carbonate mixture 20/80.Chondroitin 4 sulfate is a product Sigma and contains also minor amounts of chondroitin 6 sulfate. The table shows that by adding only 1.1 wt % of a polar polysaccharide mixture, it is possible to improve the compressive strength of a mixture CEM I/carbonate, wherein carbonate is the major component.

**Table 5**

| % H₂O w/w | Samples | DC (charge per saccharide unit) | Mw (Da) | % PS | % Sodium alginate | Strength (MPa) |
|---|---|---|---|---|---|---|
| 22 | *reference* | *n.a.* | *n.a.* | - | 0.1 | 36.8 |
| | Chondroitin 4 sulfate | 1.05 | | 1 | 0.1 | 45.2 |

## Claims

1. Composition for use as a cement comprising from 60 to 99 wt % of calcium carbonate and from 0 to 40 % by weight of cement, and at least one polysaccharide in an amount comprised between 0.1 and 10 wt %, wherein the polysaccharide has an average negative charge of at least 0.5 in terms of charge/saccharide unit, and wherein the wt % is based on the dry composition.

2. Composition according to claim 1, wherein the composition comprises from 5 to 40 wt % cement and from 60 to 95 wt % calcium carbonate.

3. Composition according to claim 2, wherein the composition comprises from 10 to 30 wt % cement and from 70 to 90 wt % calcium carbonate.

4. Composition according to claims 2-3, wherein the compressive strength of the composition is equal to or higher than 50 % of the compressive strength of the cement used in the composition.

5. Composition according to claim 1 wherein the amount of cement is comprised between 0 and 5 wt %, the amount of calcium carbonate is comprised between 90 and 99 wt %, and the total amount of polysaccharides is comprised between 1 and 10 wt %.

6. Composition according to claim 5, wherein no cement is present and the amount of the at least one polysaccharide is comprised between 2 and 10 wt %.

7. Compositions according to claims 1-6, wherein the at least one polysaccharide is selected from the list comprising: chondroitin-4-sulfate, carboxymethyl cellulose, alginate, dermatan sulfate, dextran sulfate.

8. Method for the preparation of a cementitious composition according to claims 1-7, comprising the following steps:
a. Preparing the mixture carbonate and optionally cement;
b. Adding an amount of water comprised between 10 and 100% based on the amount of the mixture a);
c. Mixing water with the mixture of carbonate and optionally cement.

9. The method of claim 8, wherein the water added in step b) comprises an amount of 0.1 to 10 wt % based on the amount of the mixture of a), of the at least one polysaccharide.

10. The method of claims 8-9, wherein the water added in step b) comprises an amount of 0.01 to 1 wt %, based on the amount of the mixture of a), of a dispersant or superplasticizer.
